# EUROPEAN PATENT SPECIFICATION

(11) **EP 2 719 713 B1**
(45) Date of publication and mention of the grant of the patent: **03.10.2018**
(21) Application number: 12799828.4
(22) Date of filing: 22.05.2012
(51) Int. Cl.: C08G 18/38, C09D 175/04, C09D 175/06, D06N 3/14

(54) **POLYURETHANE COMPOSITION, WATER REPELLENT AGENT, POLYURETHANE RESIN COMPOSITION FOR FORMING SURFACE SKIN LAYER OF LEATHER-LIKE SHEET, AND LEATHER-LIKE SHEET**
POLYURETHANZUSAMMENSETZUNG, WASSERABWEISENDES MITTEL, POLYURETHANHARZZUSAMMENSETZUNG ZUR BILDUNG EINER OBERFLÄCHENSCHICHT AUF EINER LEDERÄHNLICHEN FOLIE UND LEDERÄHNLICHE FOLIE
COMPOSITION DE POLYURÉTHANE, AGENT HYDROFUGE, COMPOSITION DE RÉSINE DE POLYURÉTHANE POUR LA FORMATION D'UNE COUCHE DE PEAU DE SURFACE D'UNE FEUILLE DE SIMILICUIR, ET FEUILLE DE SIMILICUIR

(30) Priority: 13.06.2011 JP 2011131131
(43) Date of publication of application: 16.04.2014
(73) Proprietor: DIC Corporation, Tokyo 174-8520 (JP)
(72) Inventor: KOMATSUZAKI Kunihiko, Takaishi-shi Osaka 592-0001 (JP); IWAO Takeshi, Takaishi-shi Osaka 592-0001 (JP); GOTOH Naotaka, Takaishi-shi Osaka 592-0001 (JP)
(74) Representative: Adam, Holger
(86) International application number: PCT/JP2012/063014
(87) International publication number: WO 2012/172936

(56) References cited:
- WO-A1-97/37076
- JP-A- 7 216 047
- JP-A- 7 216 047
- JP-A- 9 012 664
- JP-A- S5 945 335
- JP-A- 62 205 181
- JP-A- H06 507 438
- JP-A- 2000 154 474
- JP-A- 2009 503 242
- JP-A- 2011 503 341

## Description

### Technical Field

The present invention relates to polyurethane compositions that can impart high water repellency and that can be used, for example, for water repellents.

### Background Art

Leather-like sheets, such as artificial leather and synthetic leather, have advantages such as an excellent feel comparable to that of natural leather and are used in various fields, including cloths, furniture, car interior materials, shoes, and bags.

A typical leather-like sheet is composed of a support such as a fibrous substrate, an optional intermediate layer, such as a porous layer, on the surface of the support, and a skin layer made of a material such as urethane resin on the surface of the intermediate layer. Each layer has its own requirements. Specifically, the intermediate layer requires, for example, a soft feel, whereas the skin layer often requires, for example, durability, including water resistance, as well as softness.

In particular, with the increasing applications of leather-like sheets, there is a need for a skin layer with high water resistance, for example, sufficient to avoid discoloration of the surface of a leather-like sheet when rainwater falls thereon.

An example of a known material that can form a skin layer with high water resistance is a urethane resin composition containing a urethane resin in combination with a fluorinated water repellent. For example, one known composition contains a particular perfluoroalkyl-containing urethane oligomer prepared from perfluorooctylethyl alcohol and a polyurethane elastomer in predetermined amounts (see, for example, PTL 1).

However, the use of perfluorooctylethyl alcohol, which has been preferred for use in the manufacture of water repellents made of perfluoroalkyl-containing urethane oligomers as described above, is to be abolished for reduced environmental load.

Accordingly, a need exists in the industry for the development of a material that can impart high water resistance without the use of perfluorooctylethyl alcohol. At present, however, no material has been found that can provide water repellency comparable to those of known polyurethanes having a perfluorooctyl group and that can impart high water resistance, for example, to a skin layer of a leather-like sheet.

PTL 2 discloses a resin composition useful for a binder for magnetic recording, a releasing treating agent, etc., having excellent coating film forming properties, adhesivity, water repellence, stain resistance, wear resistance, tack resistance, etc., comprising a specific perfluoroalkyl-containing resin.

### Citation List

### Patent Literature

PTL 1: Japanese Unexamined Patent Application Publication No. 59-45335
PTL 2: JP 7 216047 A

### Summary of Invention

### Technical Problem

An object of the present invention is to provide a polyurethane composition that has water repellency comparable to those of known water-repellent materials, including polyurethanes having a perfluorooctyl group, and that can therefore impart extremely high water resistance. Solution to Problem

In the course of research to achieve the above object, the inventors have conducted research based on perfluoroalkyl-containing urethane oligomers disclosed in PTL 1. Specifically, the inventors have attempted to manufacture a urethane oligomer from an alcohol having a perfluoroalkyl group having 1 to 6 carbon atoms, such as perfluorohexylethyl alcohol, instead of perfluorooctylethyl alcohol, which is disclosed in PTL 1.

However, the urethane oligomer has a significantly lower water repellency than a urethane oligomer prepared from perfluorooctylethyl alcohol and cannot therefore impart high water resistance.

The inventors have conducted research not only on the use of an alcohol having a perfluoroalkyl group having 1 to 6 carbon atoms, such as perfluorohexylethyl alcohol, but also on various combinations with, for example, the position to which the perfluoroalkyl group is attached and the surrounding structure. This research has revealed that a polyurethane having at its ends a branched structure and an aromatic ring structure represented by general formula [I] below can impart high water repellency comparable to those of known water repellents having a perfluorooctyl group and can therefore impart high water resistance.

Specifically, the present invention relates to a polyurethane composition containing a polyurethane (A) having a structure [X] represented by general formula [I] below.

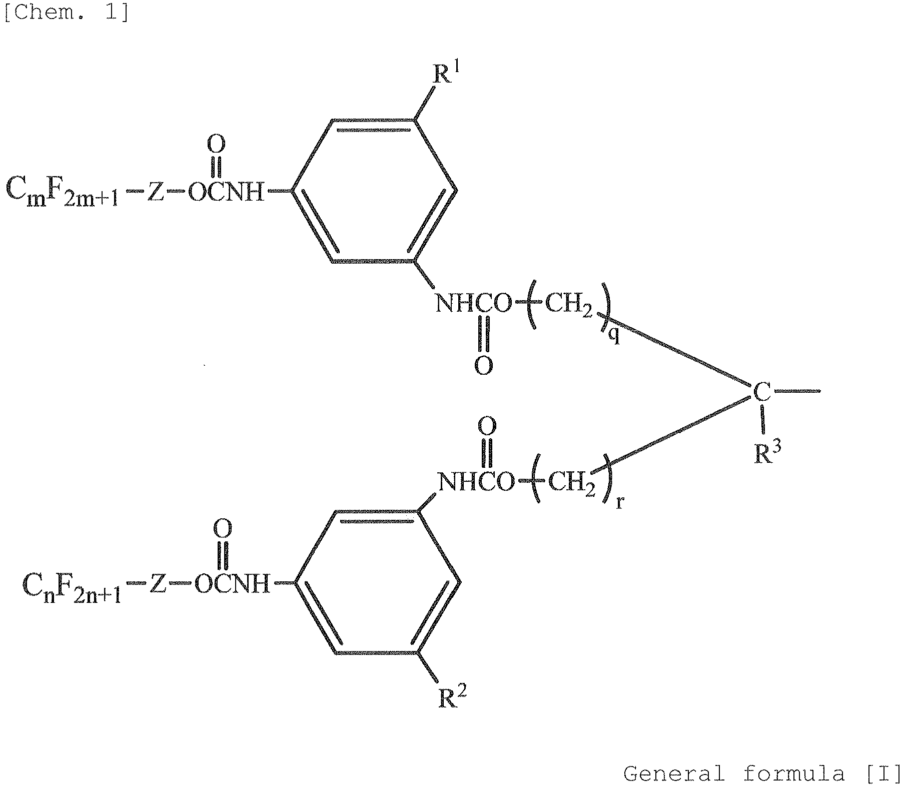

(In general formula [I], m and n are each independently an integer of 1 to 6, R¹, R², and R³ are each independently hydrogen or an alkyl group, q and r are each independently an integer of 1 to 3, and Z is an alkylene group having 1 to 3 carbon atoms.)

### Advantageous Effects of Invention

The polyurethane composition of the present invention can provide high water repellency comparable to those of polyurethanes having a perfluorooctyl group and can therefore impart high water resistance. Thus, the polyurethane composition can be used in various fields, including the formation of skin layers of leather-like sheets, various coating agents, and coating agents for forming topcoat layers.

The polyurethane composition also acts as a water repellent and can be used as an additive for various resin compositions. Specifically, the polyurethane composition is suitable for use in combination with urethane resins. Description of Embodiments

A polyurethane composition of the present invention contains a polyurethane (A) having a structure [X] represented by general formula [I] below and other optional additives. The polyurethane (A) has a particular structure represented by general formula [I] below.

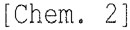

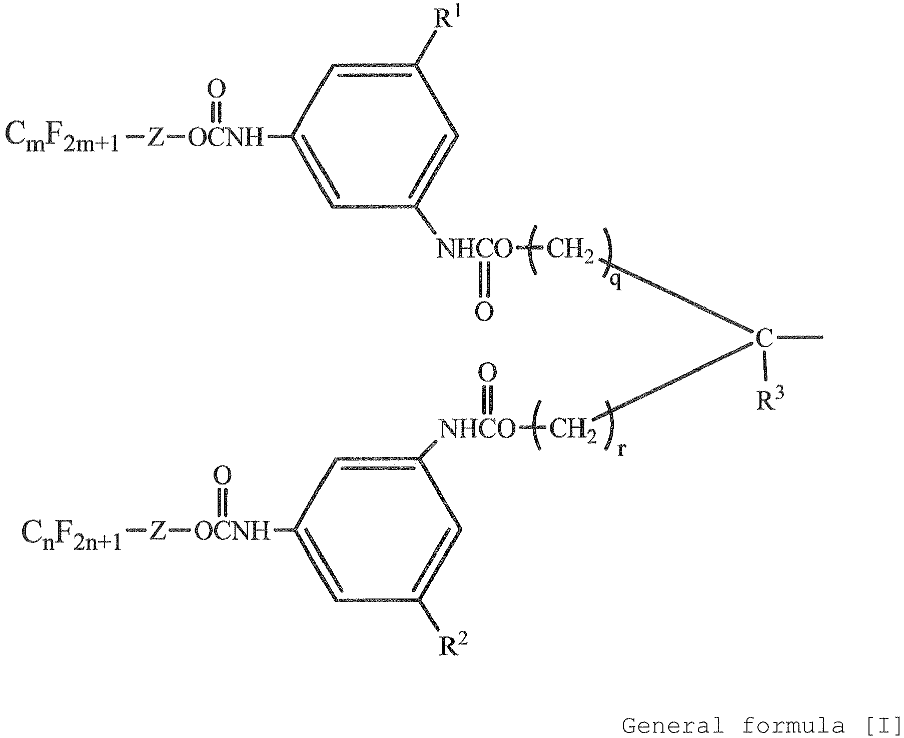

(In general formula [I], m and n are each independently an integer of 1 to 6, R¹, R², and R³ are each independently hydrogen or an alkyl group, q and r are each independently an integer of 1 to 3, and Z is an alkylene group having 1 to 3 carbon atoms.)

The structure [X] represented by general formula [I] in the polyurethane (A) is a structure important for imparting extremely high water repellency and thereby imparting high water resistance even if it has a perfluoroalkyl group having 1 to 6 carbon atoms, such as perfluorohexylethyl.

In particular, as shown in general formula [I], it is important that the perfluoroalkyl group be attached to an aromatic ring structure with a urethane bond therebetween and that two structures in which the perfluoroalkyl group is attached to the aromatic ring structure with the urethane bond therebetween form a branched structure.

If the polyurethane (A) is replaced by a polyurethane having an aliphatic structure, rather than the aromatic ring structure in general formula [I], the polyurethane composition exhibits a significantly lower water repellency and may therefore fail to impart high water resistance. In addition, the manufacture of a polyurethane having an aliphatic structure, rather than the aromatic ring structure, is time-consuming and may therefore significantly decrease the production efficiency.

If the polyurethane (A) is replaced by a polyurethane having at its molecular ends one structure in which the perfluoroalkyl group is attached to the aromatic ring structure with the urethane bond therebetween, for example, as represented by chemical formula (3), described later, the polyurethane composition exhibits a significantly lower water repellency and may therefore fail to impart high water resistance.

Thus, it is difficult to impart water repellency comparable to those of known materials simply using a perfluoroalkyl group having 1 to 6 carbon atoms, such as perfluorohexyl, instead of perfluorooctyl. The present invention, however, in which the structure [X] represented by general formula [I] is formed, can impart extremely high water repellency and can therefore impart high water resistance.

In general formula [I], as described above, m and n are each independently an integer of 1 to 6, R¹, R², and R³ are each independently hydrogen or an alkyl group, q and r are each independently an integer of 1 to 3, and Z is an alkylene group having 1 to 3 carbon atoms.

To improve the manufacturing efficiency of the polyurethane (A) having the structure [X], it is preferred that the structure [X] be represented by general formula [I] where m and n are each independently an integer of 1 to 6, R¹, R², and R³ are each independently hydrogen or an alkyl group having 1 to 3 carbon atoms, q and r are each independently 1 or 2, and Z is ethylene or propylene. It is more preferred that the structure [X] be represented by general formula [I] where m and n are each independently an integer of 1 to 6, R¹ and R² are each independently hydrogen or methyl, R³ is ethyl, q and r are each independently 1 or 2, and Z is ethylene or propylene.

The structure [X] represented by general formula [I] may be present at one or both molecular ends of the polyurethane (A), preferably at both molecular ends. If the polyurethane (A) has a multi-branched structure, the structure [X] may be present at some or all molecular ends.

To impart high water resistance, it is preferred that the proportion of the structure [X] in the entire polyurethane (A) be 30% to 90% by mass, more preferably 60% to 80% by mass.

The polyurethane (A) having the structure [X] preferably has a weight average molecular weight of 1,500 to 15,000, more preferably 1,800 to 10,000, even more preferably 1,800 to 5,000, most preferably 2,000 to 5,000, so that, when used as an additive such as a water repellent, the polyurethane (A) is easily miscible with other components, such as a matrix resin to be mixed therewith, and thus imparts good water repellency.

The polyurethane (A) can be manufactured by reacting a polyisocyanate (a1), a polyol (a2), and an alcohol (a3) having a perfluoroalkyl group having 1 to 6 carbon atoms.

To introduce the aromatic ring structure in the structure [X], it is essential to use an aromatic polyisocyanate (a1-1) as the polyisocyanate (a1).

To form the branched structure represented by the structure [X], it is preferred to use an adduct of an aromatic diisocyanate (a1-2) with a polyol having three or more hydroxyl groups, such as trimethylolpropane, as the aromatic polyisocyanate (a1-1).

Examples of aromatic diisocyanates (a1-2) include 4,4'-diphenylmethane diisocyanate, 2,4'-diphenylmethane diisocyanate, carbodiimide-modified diphenylmethane diisocyanate, crude diphenylmethane diisocyanate, phenylene diisocyanate, tolylene diisocyanate, naphthalene diisocyanate, xylylene diisocyanate, and tetramethylxylylene diisocyanate. In particular, it is preferred to use tolylene diisocyanate as the aromatic diisocyanate (a1-2) to form the structure [X] and thereby impart, for example, high water resistance.

Examples of polyols, having three or more hydroxyl groups, that can react with the aromatic diisocyanate (a1-2) include trimethylolpropane, glycerol, and 1,2,4-butanetriol. In particular, it is preferred to use trimethylolpropane as the polyol having three or more hydroxyl groups to impart, for example, high water resistance.

More specifically, the adduct is preferably a reaction product of tolylene diisocyanate with trimethylolpropane.

The adduct is preferably a product of a reaction in which the equivalent ratio [isocyanate/hydroxyl] of isocyanate groups in the aromatic diisocyanate (a1-2) to hydroxyl groups in the polyol having three or more hydroxyl groups is 1.5/1 to 3/1.

The aromatic polyisocyanate (a1-1) may be the aromatic diisocyanate (a1-2), rather than the adduct thereof. In this case, it is preferred to use a polyol having three or more hydroxyl groups, such as trimethylolpropane, as the polyol (a2), described later, to form the branched structure represented by the structure [X].

Optionally, the aromatic polyisocyanate (a1-1) may be used as the polyisocyanate (a1) in combination with, for example, an aliphatic polyisocyanate or a polyisocyanate having an alicyclic structure as a component that can form the main chain structure of the polyurethane (A).

Examples of aliphatic polyisocyanates include hexamethylene diisocyanate, lysine diisocyanate, and cyclohexane diisocyanate. Examples of polyisocyanates having an alicyclic structure include isophorone diisocyanate and dicyclohexylmethane diisocyanate.

Examples of polyols (a2) that can react with the polyisocyanate (a1) include polyester polyols, polyether polyols, and polycarbonate polyols. To impart a higher water repellency, it is preferred to use polyester polyols because they are relatively miscible with the matrix resin, described later.

Examples of polyester polyols include aliphatic polyester polyols and aromatic polyester polyols prepared by an esterification reaction of a low-molecular-weight polyol with a polycarboxylic acid, polyesters prepared by a ring-opening polymerization reaction of a cyclic ester such as ε-caprolactone or γ-butyrolactone, and copolyesters thereof.

If the polyurethane composition of the present invention is used as a water repellent, it is preferred to use an amorphous polyester polyol for improved miscibility with the matrix resin, for example, a urethane resin (B) having a weight average molecular weight of 50,000 to 120,000. Specifically, it is preferred to use, for example, an aliphatic polyester polyol prepared by reacting a low-molecular-weight polyol including a diol having a branched structure, such as neopentyl glycol, with a polycarboxylic acid.

Examples of low-molecular-weight polyols that can be used for manufacture of polyester polyols include ethylene glycol, 1,2-propanediol, 1,3-butanediol, 1,4-butanediol, 1,6-hexanediol, 1,4-cyclohexanedimethanol, 3-methyl-1,5-pentanediol, neopentyl glycol, diethylene glycol, dipropylene glycol, glycerol, and trimethylolpropane, which may be used alone or in a combination of two or more. For example, it is preferred to use ethylene glycol, 1,2-propanediol, 1,3-butanediol, or 1,4-butanediol in combination with 3-methyl-1,5-pentanediol or neopentyl glycol.

Examples of polycarboxylic acids include succinic acid, adipic acid, sebacic acid, dodecanedicarboxylic acid, azelaic acid, cyclopentanedicarboxylic acid, cyclohexanedicarboxylic acid, terephthalic acid, isophthalic acid, phthalic acid, naphthalenedicarboxylic acid, and anhydrides and ester-forming derivatives thereof, of which aliphatic polycarboxylic acids such as adipic acid are preferably used. If a polyester polyol having an aromatic cyclic structure is used, aromatic polycarboxylic acids such as terephthalic acid, isophthalic acid, phthalic acid, and naphthalenedicarboxylic acid may be used as the polycarboxylic acid.

Examples of polyether polyols that can be used as the polyol (a2) include those prepared by addition polymerization of an alkylene oxide using one or more compounds having two or more active hydrogen atoms as an initiator.

Examples of initiators include ethylene glycol, diethylene glycol, triethylene glycol, propylene glycol, trimethylene glycol, 1,3-butanediol, 1,4-butanediol, 1,6-hexanediol, neopentyl glycol, glycerol, trimethylolethane, and trimethylolpropane.

Examples of alkylene oxides include ethylene oxide, propylene oxide, butylene oxide, styrene oxide, epichlorohydrin, and tetrahydrofuran.

Examples of polycarbonate polyols that can be used as the polyol (a2) include those prepared by reacting a carbonic acid ester with a polyol and those prepared by reacting phosgene with, for example, bisphenol A.

Examples of carbonic acid esters include methyl carbonate, dimethyl carbonate, ethyl carbonate, diethyl carbonate, cyclocarbonates, and diphenyl carbonate.

Examples of polyols that can react with carbonic acid esters include dihydroxy compounds having a relatively low molecular weight, such as ethylene glycol, diethylene glycol, triethylene glycol, 1,2-propylene glycol, 1,3-propylene glycol, dipropylene glycol, 1,4-butanediol, 1,3-butanediol, 1,2-butanediol, 2,3-butanediol, 1,5-pentanediol, 1,5-hexanediol, 2,5-hexanediol, 1,6-hexanediol, 1,7-heptanediol, 1,8-octanediol, 1,9-nonanediol, 1,10-decanediol, 1,11-undecanediol, 1,12-dodecanediol, 3-methyl-1,5-pentanediol, 2-ethyl-1,3-hexanediol, 2-methyl-1,3-propanediol, 2-methyl-1,8-octanediol, 2-butyl-2-ethylpropanediol, 2-methyl-1,8-octanediol, neopentyl glycol, 1,4-cyclohexanediol, 1,4-cyclohexanedimethanol, hydroquinone, resorcin, bisphenol-A, bisphenol-F, and 4,4'-biphenol; polyether polyols such as polyethylene glycol, polypropylene glycol, and polytetramethylene glycol; and polyester polyols such as polyhexamethylene adipate, polyhexamethylene succinate, and polycaprolactone.

To improve the miscibility with the matrix resin and to further improve the water resistance, it is preferred to use a polyester polyol, polyether polyol, or polycarbonate polyol having a number average molecular weight of 500 to 4,000, more preferably 500 to 1,500.

Optionally, the polyester polyols, the polyether polyols, and the polycarbonate polyols may be used as the polyol (a2) in combination with other polyols.

Examples of other polyols include polyols such as ethylene glycol, 1,2-propanediol, 1,3-butanediol, 1,4-butanediol, 3-methyl-1,5-pentanediol, 1,6-hexanediol, 1,4-cyclohexanedimethanol, neopentyl glycol, diethylene glycol, and dipropylene glycol; polyols having a hydrophilic group, such as dimethylolpropionic acid; acrylic polyols, which are acrylic copolymers having hydroxyl groups introduced therein; polybutadiene polyols, which are butadiene copolymers having hydroxyl groups in the molecule thereof; hydrogenated polybutadiene polyols; and partially saponified ethylene-vinyl acetate copolymers.

If the polyisocyanate (a1) is the aromatic diisocyanate (a1-2), rather than the adduct of the aromatic diisocyanate (a1-2) with trimethylolpropane, it is preferred to use a polyol having three or more hydroxyl groups, such as trimethylolpropane, glycerol, or 1,2,4-butanetriol, as the polyol (a2) to form the branched structure represented by the structure [X].

Examples of alcohols (a3), having a perfluoroalkyl group having 1 to 6 carbon atoms, that can be used for manufacture of the polyurethane (A) include perfluorohexylethyl alcohol, perfluoropentylethyl alcohol, perfluorobutylethyl alcohol, perfluoropropylethyl alcohol, perfluoromethylethyl alcohol, perfluorohexylmethyl alcohol, perfluoropentylmethyl alcohol, perfluorobutylmethyl alcohol, perfluoropropylmethyl alcohol, and perfluoromethylmethyl alcohol.

To impart high water repellency and thereby form a coating with high water resistance and stain resistance, it is preferred to use an alcohol having a perfluoroalkyl group having 6 carbon atoms, such as perfluorohexylethyl alcohol or perfluorohexylmethyl alcohol.

An example of a method for manufacturing the polyurethane (A) by reacting the polyisocyanate (a1), the polyol (a2), and the alcohol (a3) having a perfluoroalkyl group having 1 to 6 carbon atoms involves reacting a polyisocyanate (a1) including the aromatic polyisocyanate a1-1) with the polyol (a2) to manufacture an isocyanate-containing polyurethane (A') and then reacting the isocyanate-containing polyurethane (A') with the alcohol (a3) having a perfluoroalkyl group having 1 to 6 carbon atoms. It is preferred to use an adduct of the aromatic diisocyanate (a1-2) with trimethylolpropane as the aromatic polyisocyanate (al-1) to form the branched structure represented by general formula [I].

The polyisocyanate (a1) including the aromatic polyisocyanate (a1-1) may be reacted with the polyol (a2) in the presence of an organic solvent such as methyl ethyl ketone or dimethylformamide or in the absence of a solvent.

The polyisocyanate (a1) is preferably reacted with the polyol (a2) such that the equivalent ratio [isocyanate groups in polyisocyanate (a1) / hydroxyl groups in polyol (a2)] of isocyanate groups in the polyisocyanate (a1) to hydroxyl groups in the polyol (a2) is 1.0 to 10.0, more preferably 1.0 to 5.0, even more preferably 2.0 to 4.0. Thus, a polyurethane (A') having isocyanate groups at its molecular ends can be prepared.

The polyisocyanate (a1) may be reacted with the polyol (a2) with due care to avoid accidents such as sudden heat generation or foaming for safety, preferably at a reaction temperature of 50°C to 120°C, more preferably 80°C to 100°C, by simultaneously mixing the polyisocyanate (a1) and the polyol (a2), or feeding them sequentially, such as by adding one to the other dropwise, and effecting a reaction for about 1 to 15 hours.

The isocyanate-containing polyurethane (A') is preferably reacted with the alcohol (a3) having a perfluoroalkyl group having 1 to 6 carbon atoms by mixing the isocyanate-containing polyurethane (A') prepared as above, or a solution of the polyurethane (A') in an organic solvent, with the alcohol (a3) having a perfluoroalkyl group having 1 to 6 carbon atoms and effecting a reaction at a temperature of about 60°C to 80°C for about 2 to 5 hours.

To impart high water repellency and thereby impart water resistance, it is more preferred to react the polyurethane (A') with the alcohol (a3) having a perfluoroalkyl group having 1 to 6 carbon atoms such that the equivalent ratio [isocyanate/hydroxyl] of isocyanate groups in the polyurethane (A') to hydroxyl groups in the alcohol (a3) is 0.6 to 1.1.

A polyurethane composition containing the polyurethane (A) prepared by the method described above may be solvent-free, or may contain a medium such as water or a solvent so that it is more miscible with the matrix resin, described later. The mass fraction of the polyurethane (A) in the polyurethane resin composition is preferably 40 to 80 parts by mass based on 100 parts by mass of the polyurethane resin composition.

The polyurethane composition containing the polyurethane (A) prepared by the method described above can be used, for example, for various coating agents, adhesives, and molding materials because it has high water repellency and can form, for example, a coating with high water resistance.

The polyurethane composition of the present invention may optionally contain various additives. Examples of additives that can be used in combination include associative thickeners, urethanization catalysts, silane coupling agents, fillers, thixotropic agents, tackifiers, waxes, heat stabilizers, light stabilizers, fluorescent brighteners, foaming agents, thermoplastic resins, thermosetting resins, pigments, dyes, conductors, antistatic agents, moisture permeability improvers, oil repellents, hollow foams, crystallization-water containing compounds, flame retardants, water absorbents, moisture absorbents, deodorants, foam stabilizers, defoamers, fungicides, preservatives, algaecides, pigment dispersants, antiblocking agents, and hydrolysis inhibitors.

Examples of associative thickeners include cellulose derivatives such as hydroxyethyl cellulose, methyl cellulose, and carboxymethyl cellulose, polyacrylic acid salts, polyvinylpyrrolidone, and urethane and polyether thickeners. In particular, urethane thickeners are preferred because they have good miscibility with the urethane resin (B) used as the matrix resin, described later. The associative thickener is preferably used in an amount of 0.5% to 5% by mass based on the total amount of polyurethane (A).

The polyurethane composition is primarily suitable for use as a water repellent because, when used as a mixture with other materials such as matrix resins, the polyurethane composition can impart high water repellency and can therefore impart high water resistance.

Examples of polyurethane resin compositions containing the polyurethane composition and materials such as matrix resins include those containing a water repellent made of the polyurethane composition of the present invention in combination with a matrix resin, such as a urethane resin or acrylic resin, that is used, for example, for various coating agents, adhesives, and molding materials. Such compositions can be used, for example, for coating agents and adhesives that have high water repellency and that can form, for example, a coating with high water resistance.

The matrix resin may be, for example, a urethane resin. The urethane resin is typically a urethane resin having a higher molecular weight than the polyurethane (A) contained in the water repellent. For example, the urethane resin is preferably a urethane resin (B) having a weight average molecular weight of 50,000 to 120,000.

The urethane resin (B) may be manufactured from materials similar to those illustrated as materials that can be used for manufacture of the polyurethane (A), including the polyisocyanates (a1), the polyols (a2), and the optional chain extenders. In particular, it is preferred to use an ester urethane resin prepared from an aromatic polyester polyol or aliphatic polyester polyol illustrated as the polyol (a2) because it is miscible with the water repellent and can therefore impart a higher water repellency.

To impart sufficient water repellency, the polyurethane resin composition containing the matrix resin and the water repellent is preferably used such that the mass of the polyurethane (A) contained in the water repellent made of the polyurethane composition is 0.1 to 5 parts by mass based on 100 parts by mass of the matrix resin (solids).

As described above, the polyurethane resin composition prepared by the method described above, containing the matrix resin and the water repellent, can be used, for example, for various coating agents, adhesives, and molding materials.

Examples of substrates on which a coating can be formed, for example, by applying a coating agent, include fibrous substrates such as woven fabrics and nonwoven fabrics; leather-like sheets; plated steel sheets such as zinc-plated steel sheets and aluminum-zinc-alloy plated steel sheets; metal substrates such as aluminum sheets, aluminum alloy sheets, magnetic steel sheets, copper sheets, and stainless steel sheets; plastic substrates such as polycarbonate substrates, polyester substrates, acrylonitrile-butadienestyrene substrates, polyacrylic substrates, polystyrene substrates, polyurethane substrates, epoxy resin substrates, polyvinyl chloride substrates, and polyamide substrates; and glass substrates. In particular, it is preferred to use leather-like sheets, such as artificial leather and synthetic leather, for processing into products such as shoes and bags as the substrate because a leather-like sheet with excellent design can be efficiently produced by bonding other members to the surface of the leather-like sheet with an adhesive or by applying a material such as putty thereto.

For example, a coating can be formed by directly applying the coating agent to the surface of the substrate and drying and curing the coating agent. A coating can also be formed by applying the coating agent of the present invention to the surface of release paper, drying and curing the coating agent, and laminating the substrate on the coated surface.

Examples of methods for applying the coating agent to the substrate include spraying, curtain coating, flow coating, roller coating, brush coating, and dipping.

The coating agent may be dried and cured at room temperature for about 1 to 10 days. To quickly cure the coating agent, it is preferred to heat the coating agent at a temperature of 50°C to 250°C for 1 to 600 seconds. If the substrate is a plastic substrate that tends to deform or discolor at relatively high temperatures, it is preferred to cure the coating agent at relatively low temperatures, i.e., about 30°C to 100°C.

It is generally preferred that the coating formed from the coating agent of the present invention have a thickness of about 0.5 to 50 µm, although it may be adjusted depending on, for example, the application of the substrate.

If the coating agent is used as a coating agent for forming topcoat layers, an intermediate layer such as a primer layer may be provided in advance on the surface of the substrate. Examples of primer layers include those formed from known coatings such as acrylic resin coatings, polyester resin coatings, alkyd resin coatings, epoxy resin coatings, fatty acid-modified epoxy resin coatings, silicone resin coatings, and polyurethane resin coatings.

The thus-formed laminate of the substrate and the coating formed from the coating agent can be used, for example, for cellular phones, household electrical appliances, OA equipment, automotive components such as car interior and exterior materials, components of various household electrical appliances, and construction materials.

Alternatively, the coating agent can be used to form a skin layer of a leather-like sheet, described above. A typical leather-like sheet is composed of a fibrous substrate that is optionally impregnated with a resin, an optional intermediate layer, such as a porous layer, on the surface of the substrate, and a skin layer on the surface of the intermediate layer. The skin layer can be formed from the coating agent of the present invention.

Examples of fibrous substrates include nonwoven fabrics, woven fabrics, and knitting. Examples of materials for substrates include polyester fibers, nylon fibers, acrylic fibers, polyurethane fibers, acetate fibers, rayon fibers, polylactic acid fibers, cotton, hemp, silk, wool, and blended fibers thereof.

The substrate may optionally be subjected to surface treatments such as antistatic treatment, release treatment, water-repellent treatment, water-absorbent treatment, antibacterial/deodorizing treatment, bacteriostatic treatment, and UV protective treatment.

A leather-like sheet having a skin layer directly laminated on a surface of a fibrous substrate can be manufactured, for example, by applying and drying the urethane resin composition to form a skin layer on a sheet subjected to release treatment and laminating the fibrous substrate on the skin layer with an adhesive. Examples of methods for applying the coating agent for forming the skin layer of the leather-like sheet to the sheet include gravure coating, knife coating, pipe coating, and comma coating. The urethane resin composition applied in the above manner may be dried and cured, for example, by leaving it standing at room temperature for about 1 to 10 days or by heating it at a temperature of 50°C to 250°C for 1 to 600 seconds.

A leather-like sheet having an intermediate layer, such as a porous layer, between a fibrous substrate and a skin layer can be manufactured, for example, by applying and curing the coating agent for forming the skin layer of the leather-like sheet to form a skin layer on a sheet subjected to release treatment, applying and curing a resin composition, for forming the porous layer, foamed by a known foaming process such as mechanical foaming or water foaming to form a porous layer on the skin layer, and laminating the fibrous substrate on the porous layer with a known adhesive.

The leather-like sheets produced in the above manner repel water such as rainwater and can therefore be used for various applications, including shoes and bags.

### EXAMPLES

The present invention is further illustrated by the following examples and so on.

### EXAMPLE 1

To methyl ethyl ketone were added 150 g of an adduct prepared by reacting tolylene diisocyanate with trimethylolpropane such that the molar ratio [isocyanate/hydroxyl] of isocyanate groups in tolylene diisocyanate to hydroxyl groups in trimethylolpropane was 2.0 and 90 g of a polyester polyol, with a number average molecular weight of 550, prepared by reacting 1,4-butanediol and neopentyl glycol with adipic acid. The mixture was reacted at 80°C with stirring under nitrogen flow for 3 hours to yield a methyl ethyl ketone solution of a urethane prepolymer having isocyanate groups at its molecular ends.

The methyl ethyl ketone solution of the urethane prepolymer was mixed with 120 parts by mass of dimethylformamide at 50°C, was mixed with 90 g of perfluorohexylethyl alcohol, and was reacted at 70°C for 3 hours. Thereafter, the reaction was terminated with ethanol to yield polyurethane composition (R-1) (nonvolatile matter = 60% by mass, weight average molecular weight of polyurethane = 2,000) containing a polyurethane having the structure represented by chemical formula (1) below.

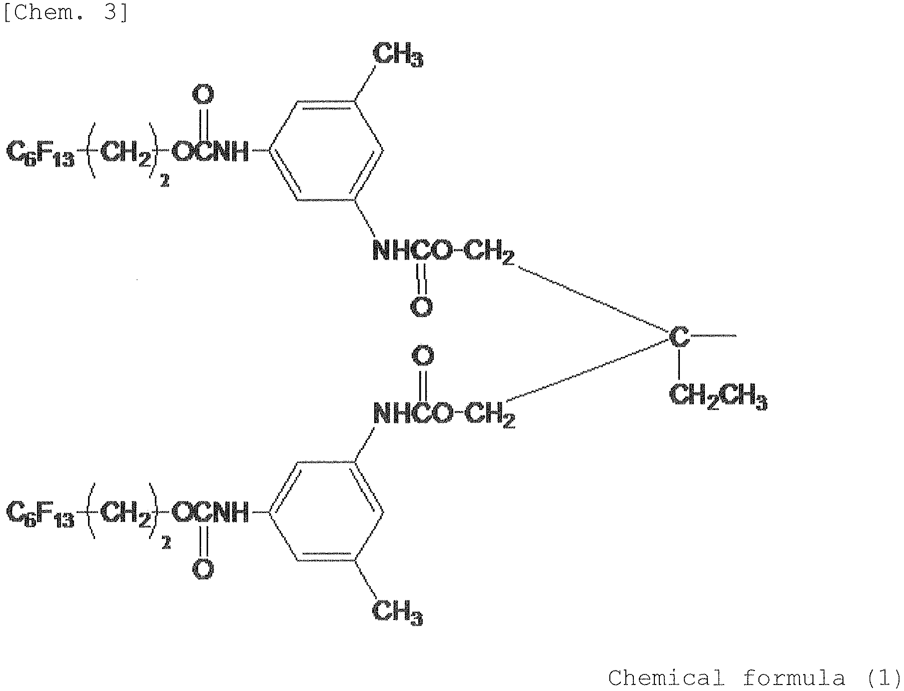

### EXAMPLE 2

To methyl ethyl ketone were added 150 g of an adduct prepared by reacting tolylene diisocyanate with trimethylolpropane such that the molar ratio [isocyanate/hydroxyl] of isocyanate groups in tolylene diisocyanate to hydroxyl groups in trimethylolpropane was 2.0 and 90 g of a polyester polyol, with a number average molecular weight of 2,000, prepared by reacting 1,4-butanediol and neopentyl glycol with adipic acid. The mixture was reacted at 80°C with stirring under nitrogen flow for 3 hours to yield a methyl ethyl ketone solution of a urethane prepolymer having isocyanate groups at its molecular ends.

The methyl ethyl ketone solution of the urethane prepolymer was mixed with 120 parts by mass of dimethylformamide at 50°C, was mixed with 90 g of perfluorohexylethyl alcohol, and was reacted at 70°C for 3 hours. Thereafter, the reaction was terminated with ethanol to yield polyurethane composition (R-2) (nonvolatile matter = 60% by mass, weight average molecular weight of polyurethane = 4,000) containing a polyurethane having the structure represented by chemical formula (1).

### EXAMPLE 3

To methyl ethyl ketone were added 150 g of an adduct prepared by reacting tolylene diisocyanate with trimethylolpropane such that the molar ratio [isocyanate/hydroxyl] of isocyanate groups in tolylene diisocyanate to hydroxyl groups in trimethylolpropane was 2.0 and 90 g of polyoxytetramethylene glycol with a number average molecular weight of 650. The mixture was reacted at 80°C with stirring under nitrogen flow for 3 hours to yield a methyl ethyl ketone solution of a urethane prepolymer having isocyanate groups at its molecular ends.

The methyl ethyl ketone solution of the urethane prepolymer was mixed with 120 parts by mass of dimethylformamide at 50°C, was mixed with 90 g of perfluorohexylethyl alcohol, and was reacted at 70°C for 3 hours. Thereafter, the reaction was terminated with ethanol to yield polyurethane composition (R-3) (nonvolatile matter = 60% by mass, weight average molecular weight of polyurethane = 2,000) containing a polyurethane having the structure represented by chemical formula (1).

### COMPARATIVE EXAMPLE 1

To methyl ethyl ketone were added 150 g of an adduct prepared by reacting tolylene diisocyanate with trimethylolpropane such that the molar ratio [isocyanate/hydroxyl] of isocyanate groups in tolylene diisocyanate to hydroxyl groups in trimethylolpropane was 2.0 and 130 g of a polyester polyol, with a number average molecular weight of 550, prepared by reacting 1,4-butanediol and neopentyl glycol with adipic acid. The mixture was reacted at 80°C with stirring under nitrogen flow for 3 hours to yield a methyl ethyl ketone solution of a urethane prepolymer having isocyanate groups at its molecular ends.

The methyl ethyl ketone solution of the urethane prepolymer was mixed with 130 parts by mass of dimethylformamide at 50°C, was mixed with 75 g of perfluorooctylethyl alcohol, and was reacted at 70°C for 3 hours. Thereafter, the reaction was terminated with ethanol to yield polyurethane composition (R'-1) (nonvolatile matter = 60% by mass, weight average molecular weight of polyurethane = 2,000) containing a polyurethane having the structure represented by chemical formula (2) below.

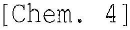

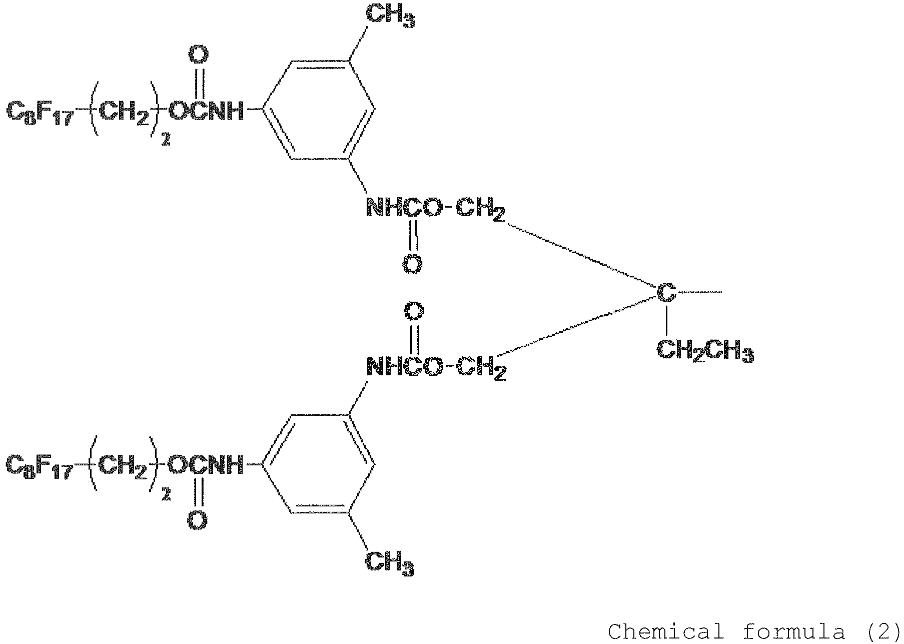

### COMPARATIVE EXAMPLE 2

To methyl ethyl ketone were added 150 g of tolylene diisocyanate and 470 g of a polyester polyol, with a number average molecular weight of 550, prepared by reacting 1,4-butanediol and neopentyl glycol with adipic acid. The mixture was reacted at 80°C with stirring under nitrogen flow for 3 hours to yield a methyl ethyl ketone solution of a urethane prepolymer having isocyanate groups at its molecular ends.

The methyl ethyl ketone solution of the urethane prepolymer was mixed with 350 parts by mass of dimethylformamide at 50°C, was mixed with 250 g of perfluorohexylethyl alcohol, and was reacted at 70°C for 3 hours. Thereafter, the reaction was terminated with ethanol to yield polyurethane composition (R'-2) (nonvolatile matter = 60% by mass, weight average molecular weight of polyurethane = 1,500) containing a polyurethane having at its molecular ends the structure represented by chemical formula (3) below, which, unlike chemical formula (1), is not branched.

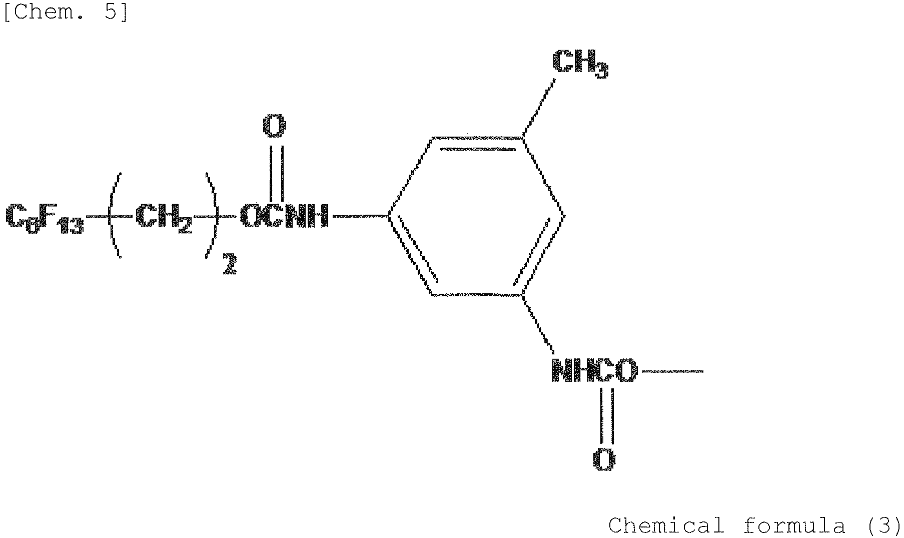

### COMPARATIVE EXAMPLE 3

To methyl ethyl ketone were added tolylene diisocyanate and 470 g of a polyester polyol, with a number average molecular weight of 550, prepared by reacting 1,4-butanediol and neopentyl glycol with adipic acid. The mixture was reacted at 80°C with stirring under nitrogen flow for 3 hours to yield a methyl ethyl ketone solution of a urethane prepolymer having isocyanate groups at its molecular ends.

The methyl ethyl ketone solution of the urethane prepolymer was mixed with 350 parts by mass of dimethylformamide at 50°C, was mixed with 500 g of 1,3-bis(3,3,4,4,5,5,6,6,7,7,8,8,8-tridecafluorooctyloxypropan-2-ol, and was reacted at 70°C for 3 hours. Thereafter, the reaction was terminated with ethanol to yield polyurethane composition (R'-3) (nonvolatile matter = 60% by mass, weight average molecular weight of polyurethane = 2,000).

The weight average molecular weights of the polyurethanes prepared in Examples 1 to 3 and Comparative Examples 1 to 3 were measured by the following method.

### Measurement of Weight Average Molecular Weight

The weight average molecular weight was measured by gel permeation chromatography (GPC) under the following conditions.

Measurement system: high-speed GPC system ("HLC-8220 GPC" available from Tosoh Corporation)

Columns: the following columns available from Tosoh Corporation were connected in series.

"TSKgel G5000" (7.8 mm I.D. × 30 cm) × 1
"TSKgel G4000" (7.8 mm I.D. × 30 cm) × 1
"TSKgel G3000" (7.8 mm I.D. × 30 cm) × 1
"TSKgel G2000" (7.8 mm I.D. × 30 cm) × 1
Detector: differential refractive index detector (RI)
Column temperature: 40°C
Eluent: tetrahydrofuran
Flow rate: 1.0 mL/min
Injection volume: 100 µL
Measurement sample concentration: tetrahydrofuran solution containing 0.4% by mass of solids
Standards: the following polystyrene standards were used to prepare a calibration curve.

Polystyrene standards:
"TSKgel Polystyrene Standard A-500" available from Tosoh Corporation
"TSKgel Polystyrene Standard A-1000" available from Tosoh Corporation
"TSKgel Polystyrene Standard A-2500" available from Tosoh Corporation
"TSKgel Polystyrene Standard A-5000" available from Tosoh Corporation
"TSKgel Polystyrene Standard F-1" available from Tosoh Corporation
"TSKgel Polystyrene Standard F-2" available from Tosoh Corporation
"TSKgel Polystyrene Standard F-4" available from Tosoh Corporation
"TSKgel Polystyrene Standard F-10" available from Tosoh Corporation
"TSKgel Polystyrene Standard F-20" available from Tosoh Corporation
"TSKgel Polystyrene Standard F-40" available from Tosoh Corporation
"TSKgel Polystyrene Standard F-80" available from Tosoh Corporation
"TSKgel Polystyrene Standard F-128" available from Tosoh Corporation
"TSKgel Polystyrene Standard F-288" available from Tosoh Corporation
"TSKgel Polystyrene Standard F-550" available from Tosoh Corporation

### EXAMPLE 4

Polyurethane resin composition (S-1) was prepared by mixing 1 part by mass of a water repellent, 100 parts by mass of a matrix resin, and 200 parts by mass of dimethylformamide. The water repellent was polyurethane composition (R-1) prepared in Example 1. The matrix resin was a dimethylformamide solution (nonvolatile matter = 30% by mass) of a urethane resin, with a weight average molecular weight of 100,000, prepared by reacting a polyester polyol, with a number average molecular weight of 2,000, prepared by reacting 1,4-butanediol and neopentyl glycol with adipic acid, polyoxytetramethylene glycol, and ethylene glycol with 4,4'-diphenylmethane diisocyanate.

A nonwoven fabric (0.7 mm thick) of polyester resin fiber was dipped in urethane resin composition (S-1) prepared in the above manner until the nonwoven fabric was sufficiently filled therewith. Thereafter, the nonwoven fabric was passed between nip rollers with a clearance of 1.0 mm and was then dipped in a coagulation bath of water at 20°C for 5 minutes.

The nonwoven fabric was washed with warm water at 50°C for 60 minutes and was dried at 120°C for 30 minutes to obtain leather-like sheet (T-1) having a skin layer formed from polyurethane composition (S-1) on the surface of the nonwoven fabric.

### EXAMPLE 5

Polyurethane resin composition (S-2) and leather-like sheet (T-2) were produced as in Example 4 except that the water repellent made of polyurethane composition (R-1) prepared in Example 1 was used in an amount of 2 parts by mass, rather than 1 part by mass.

### EXAMPLE 6

Polyurethane resin composition (S-3) and leather-like sheet (T-3) were produced as in Example 4 except that 1 part by mass of the water repellent made of polyurethane composition (R-1) prepared in Example 1 was replaced by 1 part by mass of a water repellent made of polyurethane composition (R-2) prepared in Example 2.

### EXAMPLE 7

Polyurethane resin composition (S-4) and leather-like sheet (T-4) were produced as in Example 4 except that 1 part by mass of the water repellent made of polyurethane composition (R-1) prepared in Example 1 was replaced by 1 part by mass of a water repellent made of polyurethane composition (R-3) prepared in Example 3.

### COMPARATIVE EXAMPLE 4

Polyurethane resin composition (S'-1) and leather-like sheet (T'-1) were produced as in Example 4 except that 1 part by mass of the water repellent made of polyurethane composition (R-1) prepared in Example 1 was replaced by 1 part by mass of a water repellent made of polyurethane composition (R'-1) prepared in Comparative Example 1.

### COMPARATIVE EXAMPLE 5

Polyurethane resin composition (S'-2) and leather-like sheet (T'-2) were produced as in Example 4 except that 1 part by mass of the water repellent made of polyurethane composition (R-1) prepared in Example 1 was replaced by 1 part by mass of a water repellent made of polyurethane composition (R'-2) prepared in Comparative Example 2.

### COMPARATIVE EXAMPLE 6

Polyurethane resin composition (S'-3) and leather-like sheet (T'-3) were produced as in Example 4 except that 1 part by mass of the water repellent made of polyurethane composition (R-1) prepared in Example 1 was replaced by 1 part by mass of a water repellent made of polyurethane composition (R'-3) prepared in Comparative Example 3.

### Method for Evaluation of Water Repellency

### Method for Evaluation of Water Resistance 1

A drop of water (about 0.1 mL) was placed on the skin layer of each of leather-like sheets (T-1) to (T'-3) produced as above to determine whether the drop of water was absorbed into the skin layer and, when the drop of water was absorbed, how much time passed before the drop of water was completely absorbed into the skin layer of the leather-like sheet. A leather-like sheet that did not allow the drop of water to be absorbed into the skin layer was determined to have high water resistance and was rated as "excellent". A leather-like sheet that allowed the drop of water to be partially absorbed into the skin layer but that reached complete absorption after six hours or more was rated as "good". A leather-like sheet that reached complete absorption after three to less than six hours was rated as "satisfactory". A leather-like sheet that reached complete absorption after one to less than three hours was rated as "fair". A leather-like sheet that reached complete absorption after less than one hour was rated as "poor". Method for Evaluation of Water Resistance 2

Each of leather-like sheets (T-1) to (T'-3) produced as above was cut into a rectangle with a width of 3 cm and a length of 15 cm and was held such that the long sides thereof were perpendicular to a surface of colored water, described below.

The rectangular test piece was dipped at its bottom end to a depth of 2 cm in the colored water and was left standing for 24 hours.

Thereafter, the test piece was checked for the height (top end) to which the test piece absorbed the colored water from its bottom end, and the length from the top end to the height 2 cm above the bottom end of the test piece was measured. A test piece whose length measured was 0 cm, meaning that it absorbed no colored water, was rated as "excellent". A test piece whose length measured was more than 0 to 0.5 cm was rated as "good". A test piece whose length measured was more than 0.5 to less than 1.0 cm was rated as "fair". A test piece whose length measured was 1.0 cm or more was rated as "poor".

### Evaluation of Crosslinking Load

A leather-like sheet that used perfluorooctylethyl alcohol and thus did not achieve reduced environmental load was rated as "poor". A leather-like sheet that used no perfluorooctylethyl alcohol but did not achieve water repellency similar to that of a leather-like sheet that uses perfluorooctylethyl alcohol was rated as "fair". A leather-like sheet that used no perfluorooctylethyl alcohol and achieved water repellency comparable to that of a leather-like sheet that uses perfluorooctylethyl alcohol was rated as "good".

**[Table 1]**

| Table 1 | Example 4 | Example 5 | Example 6 | Example 7 |
|---|---|---|---|---|
| Polyurethane resin composition | S-1 | S-2 | S-3 | S-4 |
| Polyurethane composition (water repellent) | R-1 | R-1 | R-2 | R-3 |
| Weight average molecular weight of polyurethane in water repellent | 2,000 | 2,000 | 4,000 | 2,000 |
| [Water repellent / matrix resin] (nonvolatile matter; mass ratio) | 0.6/30 | 1.2/30 | 0.6/30 | 0.6/30 |
| Water resistance 1 | Excellent | Excellent | Excellent | Excellent |
| Water resistance 2 | Excellent | Excellent | Good (0.5 cm) | Good (0.5 mm) |
| Environmental load | Good | Good | Good | Good |

**[Table 2]**

| Table 2 | Comparative Example 4 | Comparative Example 5 | Comparative Example 6 |
|---|---|---|---|
| Polyurethane resin composition | S'-1 | S'-2 | S'-3 |
| Polyurethane composition (water repellent) | R'-1 | R'-2 | R'-3 |
| Weight average molecular weight of polyurethane in water repellent | 2,000 | 1,500 | 2,000 |
| [Water repellent / matrix resin] (nonvolatile matter; mass ratio) | 0.6/30 | 0.6/30 | 0.6/30 |
| Water resistance 1 | Excellent | Poor (23 minutes) | Fair (1 hour) |
| Water resistance 2 | Excellent | Poor (6.0 cm) | Poor (1.5 cm) |
| Environmental load | Poor | Fair | Fair |

The coating and the leather-like sheet formed from polyurethane resin composition (S-1) prepared in Example 4 had extremely high water resistance with reduced environmental load. Similarly, the coating and the leather-like sheet formed from polyurethane resin composition (S-2) prepared in Example 5 had extremely high water resistance with reduced environmental load.

The coatings and the leather-like sheets formed from polyurethane resin composition (S-3) prepared in Examples 6 and 7 had high water resistance with reduced environmental load.

The coating and the leather-like sheet formed from polyurethane resin composition (S'-1) in Comparative Example 4, which contained polyurethane composition (R'-1) having the structure represented by chemical formula (2), had extremely high water resistance, although reduced environmental load was not achieved because perfluorooctylethyl alcohol was used.

The coating and the leather-like sheet formed from polyurethane resin composition (S'-2) in Comparative Example 5, which contained polyurethane composition (R'-2) having the structure represented by chemical formula (3), which differs from chemical formula (1), did not have water repellency, such as water resistance, sufficient for practical use.

Similarly, the coating and the leather-like sheet formed from polyurethane resin composition (S'-3) in Comparative Example 6, which contained polyurethane composition (R'-3), did not have water repellency, such as water resistance, sufficient for practical use.

## Claims

1. A polyurethane composition comprising a polyurethane (A) having a structure [X] represented by general formula [I] : 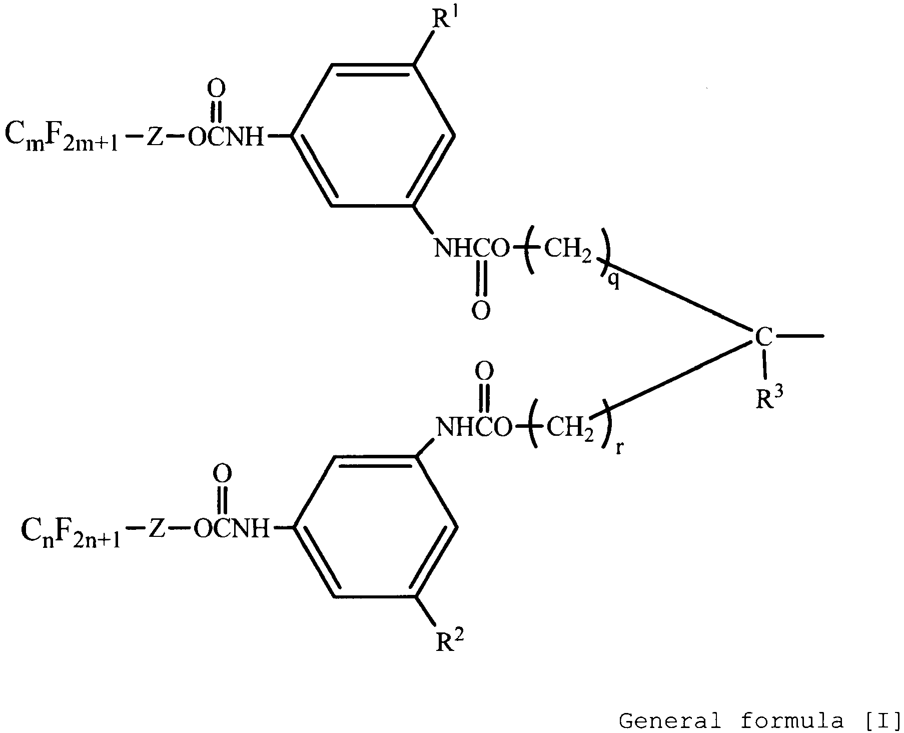 where m and n are each independently an integer of 1 to 6, R¹, R², and R³ are each independently hydrogen or an alkyl group, q and r are each independently an integer of 1 to 3, and Z is an alkylene group having 1 to 3 carbon atoms.

2. The polyurethane composition according to Claim 1, wherein the structure [X] is represented by general formula [I] where m and n are each independently an integer of 1 to 6, R¹, R², and R³ are each independently hydrogen or an alkyl group having 1 to 3 carbon atoms, q and r are each independently 1 or 2, and Z is ethylene or propylene.

3. The polyurethane composition according to Claim 1, wherein the polyurethane (A) is prepared by reacting, with a polyol (a2), a polyisocyanate (a1) including an aromatic polyisocyanate (a1-1) that is an adduct of an aromatic diisocyanate (a1-2) with trimethylolpropane to prepare an isocyanate-containing polyurethane (A') and then reacting the isocyanate-containing polyurethane (A') with an alcohol (a3) having a perfluoroalkyl group having 1 to 6 carbon atoms.

4. The polyurethane composition according to Claim 1, wherein the polyurethane (A) has a weight average molecular weight of 1,500 to 10,000.

5. The polyurethane composition according to Claim 3, wherein the polyol (a2) is a polyester polyol.

6. A water repellent comprising the polyurethane composition according to any one of Claims 1 to 5.

7. A polyurethane resin composition for forming a skin layer of a leather-like sheet, comprising the water repellent according to Claim 6 and a urethane resin (B) having a weight average molecular weight of 50,000 to 120,000.

8. A leather-like sheet comprising a support layer, an optional intermediate layer, and a skin layer, wherein the skin layer is formed from the polyurethane resin composition for forming a skin layer of a leather-like sheet according to Claim 7.

## Patentansprüche

1. Polyurethanzusammensetzung, umfassend ein Polyurethan (A), das eine Struktur [X] hat, die durch die allgemeine Formel [I] dargestellt wird: 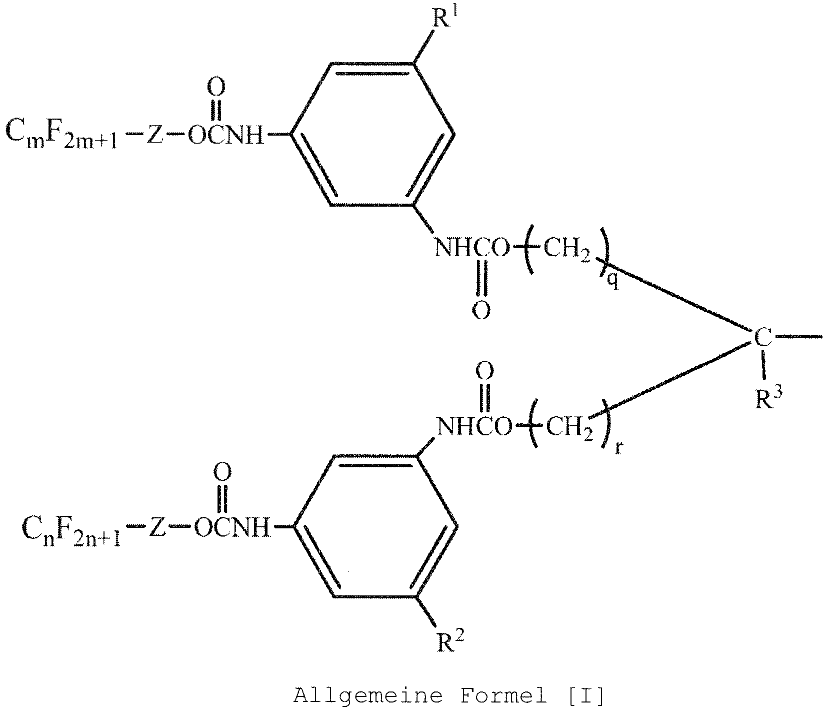 worin m und n jeweils unabhängig eine ganze Zahl von 1 bis 6 sind, R¹, R² und R³ jeweils unabhängig Wasserstoff oder eine Alkylgruppe sind, q und r jeweils unabhängig eine ganze Zahl von 1 bis 3 sind und Z eine Alkylengruppe mit 1 bis 3 Kohlenstoffatomen ist.

2. Polyurethanzusammensetzung gemäß Anspruch 1, wobei die Struktur [X] durch allgemeine Formel [I] dargestellt wird, worin m und n jeweils unabhängig eine ganze Zahl von 1 bis 6 sind, R¹, R² und R³ jeweils unabhängig Wasserstoff oder eine Alkylgruppe mit 1 bis 3 Kohlenstoffatomen sind, q und r jeweils unabhängig 1 oder 2 sind und Z Ethylen oder Propylen ist.

3. Polyurethanzusammensetzung gemäß Anspruch 1, wobei das Polyurethan (A) hergestellt wird durch Umsetzen, mit einem Polyol (a2), eines Polyisocyanats (a1), das ein aromatisches Polyisocyanat (a1-1) umfasst, welches ein Addukt eines aromatischen Diisocyanats (a1-2) mit Trimethylpropan ist, unter Herstellung eines Isocyanat-enthaltenden Polyurethan (A') und danach Umsetzen des Isocyanat-enthaltenden Polyurethan (A') mit einem Alkohol (a3), der eine Perfluoralkylgruppe mit 1 bis 6 Kohlenstoffatomen hat.

4. Polyurethanzusammensetzung gemäß Anspruch 1, wobei das Polyurethan (A) ein gewichtsmittleres Molekulargewicht von 1.500 bis 10.000 hat.

5. Polyurethanzusammensetzung gemäß Anspruch 3, wobei das Polyol (a2) ein Polyesterpolyol ist.

6. Wasserabweisendes Mittel, das die Polyurethanzusammensetzung gemäß einem der Ansprüche 1 bis 5 umfasst.

7. Polyurethanharzzusammensetzung zur Bildung einer Hautschicht einer lederartigen Folie, umfassend das wasserabweisende Mittel gemäß Anspruch 6 und ein Urethanharz (B) mit einem gewichtsmittleren Molekulargewicht von 50.000 bis 120.000.

8. Lederartige Folie, umfassend eine Trägerschicht, eine optionale Zwischenschicht und eine Hautschicht, wobei die Hautschicht aus der Polyurethanharzzusammensetzung zur Bildung einer Hautschicht einer lederartigen Folie gemäß Anspruch 7 gebildet ist.

## Revendications

1. Composition de polyuréthane comprenant un polyuréthane (A) présentant une structure [X] représentée par la formule générale [I] : 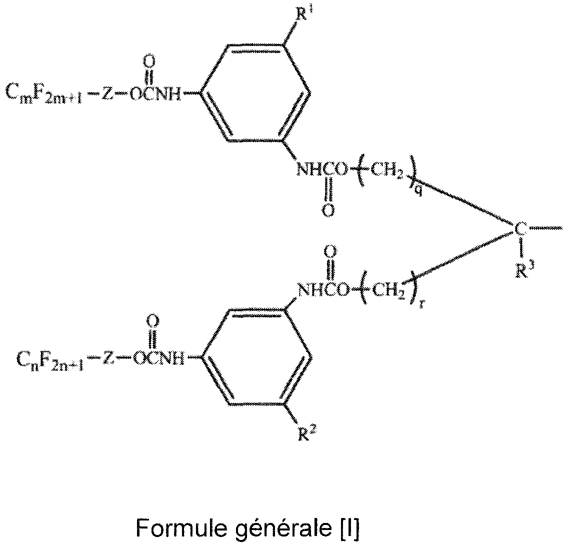 où m et n sont chacun indépendamment un nombre entier de 1 à 6, R¹, R² et R³ sont chacun indépendamment de l'hydrogène ou un groupe d'alkyle, q et r sont chacun indépendamment un nombre entier de 1 à 3, et Z est un groupe d'alkylène ayant de 1 à 3 atomes de carbone.

2. Composition de polyuréthane selon la revendication 1, dans laquelle la structure [X] est représentée par la formule générale [I], où m et n sont chacun indépendamment un nombre entier de 1 à 6, R¹, R² et R³ sont chacun indépendamment de l'hydrogène ou un groupe d'alkyle ayant de 1 à 3 atomes de carbone, q et r sont chacun indépendamment 1 ou 2, et Z est de l'éthylène ou du propylène.

3. Composition de polyuréthane selon la revendication 1, dans laquelle le polyuréthane (A) est préparé par réaction, avec un polyol (a2), d'un polyisocyanate (a1) comprenant un polyisocyanate aromatique (a1-1) qui est un adduit d'un diisocyanate aromatique (a1-2) avec du triméthylpropane pour préparer un polyuréthane contenant de l'isocyanate (A'), puis par réaction du polyuréthane contenant de l'isocyanate (A') avec un alcool (a3) ayant un groupe de perfluoroalkyl ayant de 1 à 6 atomes de carbone.

4. Composition de polyuréthane selon la revendication 1, dans laquelle le polyuréthane (A) présente un poids moléculaire moyen en poids de 1500 à 10 000.

5. Composition de polyuréthane selon la revendication 3, dans laquelle le polyol (a2) est un polyol de polyester.

6. Agent hydrofuge comprenant la composition de polyuréthane selon l'une quelconque des revendications 1 à 5.

7. Composition de résine de polyuréthane pour former une couche de peau de surface d'une feuille de similicuir, comprenant l'agent hydrofuge selon la revendication 6 et une résine d'uréthane (B) présentant un poids moléculaire moyen en poids de 50 000 à 120 000.

8. Feuille de similicuir comprenant une couche de support, une couche intermédiaire facultative, et une couche de peau de surface, dans laquelle la couche de peau de surface est constituée de la composition de résine de polyuréthane pour constituer une couche de peau de surface d'une feuille de similicuir selon la revendication 7.
